# EUROPEAN PATENT APPLICATION

(11) **EP 4 831 307 A1**
(43) Date of publication of application: **28.10.2026**
(21) Application number: 24907990.6
(22) Date of filing: 16.12.2024
(51) Int. Cl.: C22B 3/12, C22B 3/42, C22B 3/44, C22B 26/12, H01M 10/54

(54) **METHOD FOR RECOVERING LITHIUM FROM CATHODE MATERIAL WASHING SOLUTION**

(30) Priority: 18.12.2023 KR 20230185165
(71) Applicant: POSCO Holdings Inc., Pohang-si, Gyeongsangbuk-do 37859 (KR)
(72) Inventor: CHOI, Sanghyeon, Pohang-si, Gyeongsangbuk-do 37859 (KR); LEE, Sangon, Pohang-si, Gyeongsangbuk-do 37859 (KR); KIM, Hyunsoo, Pohang-si, Gyeongsangbuk-do 37859 (KR); KIM, Seung Goo, Pohang-si, Gyeongsangbuk-do 37859 (KR)
(74) Representative: Pfenning, Meinig & Partner mbB
(86) International application number: PCT/KR2024/020441
(87) International publication number: WO 2025/135707

(57) **Abstract**

The present invention relates to a method for recovering lithium, comprising preparing a waste liquid containing lithium and having a pH of 8 or more, introducing a Ca compound into the waste liquid to remove impurities, and recovering lithium in the waste liquid from which the impurities have been removed.

## Description

### [TECHNICAL FIELD]

The present invention relates to a method for recovering lithium, and more particularly, to a method for recovering lithium from a washing solution of a positive electrode material.

### [BACKGROUND ART]

Secondary batteries are widely used from small electronic devices such as mobile phones or notebook computers to large devices such as electric vehicles (EVs) or energy storage systems (ESSs). As the fields of application of secondary batteries expand to overall areas of daily life, production volume of secondary batteries is also increasing.

A key component of secondary batteries is lithium, which is used as a main component of a positive electrode material. The lithium is generally manufactured from lithium-containing ore, and since manufacturing costs and the price of the raw material itself are high in the manufacturing process, research for reducing manufacturing costs is being actively conducted.

As one of such studies, research has been actively conducted on a method for recovering lithium from a washing solution for removing by-products generated in a process of manufacturing a positive electrode material of a lithium secondary battery. Specifically, in the process of manufacturing the positive electrode material of the lithium secondary battery, there is a problem in that a large amount of lithium by-products is generated on the surface of the positive electrode material. In order to remove the lithium by-products, a water-washing process is performed, and in this process, a large amount of washing solution containing lithium and impurities, sulfate ions, carbonate ions, and some phosphorus ions may be generated.

In order to recover a high-grade lithium compound from the washing solution, a concentration process for increasing the concentration of lithium in the washing solution should be performed first. However, since various components are dissolved together in the washing solution, there is a problem in that it is difficult to recover a high-grade lithium compound.

In particular, phosphorus ions and carbonate ions in the washing solution may be present as impurities of raw materials used in the process of manufacturing the positive electrode material, and may precipitate as lithium phosphate (Li₃PO₄) and lithium carbonate (Li₂CO₃), respectively, during the concentration process of the washing solution, thereby causing loss of Li and interfering with recovery of a high-grade lithium compound. Even when there is no loss of Li during the concentration process of the washing solution, it is difficult to recover a high-grade lithium compound due to the influence of sulfate ions. In particular, in the crystallization process of Li₂CO₃, sulfate ions are contained in Li₂CO₃, thereby causing a problem in that recovery of high-grade lithium is difficult.

### [DETAILED DESCRIPTION OF THE INVENTION]

### [Technical Problem]

A technical problem to be solved by the present invention is to provide a method for recovering lithium, by which high-grade lithium can be recovered by easily removing phosphorus ions and carbonate ions when recovering lithium from a washing solution of a positive electrode material.

### [Technical Solution]

A method for manufacturing lithium hydroxide according to one embodiment of the present invention may include preparing a waste liquid containing lithium and having a pH of 8 or more, introducing a Ca compound into the waste liquid to remove impurities, and recovering lithium in the waste liquid from which the impurities have been removed.

In one embodiment, the waste liquid containing lithium and having a pH of 8 or more may be a washing solution of a positive electrode material. In one embodiment, by the step of removing the impurities, P in the waste liquid may be removed to 0.003 g/L or less.

In one embodiment, by the step of removing the impurities, Si may be eluted to 0.003 g/L or less. In one embodiment, by the step of removing the impurities, carbonate ions in the waste liquid may be removed in the form of CaCO₃.

In one embodiment, phosphorus (P) ions in the waste liquid may be removed first, and then carbonate ions (CO₃²⁻) may be removed. In one embodiment, in the step of removing the impurities, the Ca compound may be introduced in an amount of 0.09 t or more based on 1,000 m³ of the waste liquid. In one embodiment, in the step of removing the impurities, the Ca compound may be introduced in an amount of 15 t or more based on 1,000 m³ of the waste liquid.

In one embodiment, by the step of removing the impurities, phosphorus (P) ions may be converted into and removed as Ca₅(OH)(PO₄)₃ (hydroxyapatite). In one embodiment, the step of recovering lithium may include concentrating the waste liquid from which the impurities have been removed, and the step of concentrating the waste liquid may concentrate the waste liquid by 80% to 95% based on the waste liquid before concentration.

In one embodiment, by the step of concentrating the waste liquid, the lithium may be concentrated to 20 g/L to 35 g/L. In one embodiment, by the step of concentrating the waste liquid, at least one of lithium phosphate (Li₃PO₄) and lithium carbonate (Li₂CO₃) may not be precipitated.

In one embodiment, the step of concentrating the waste liquid from which the impurities have been removed may include a causticization step of adding sodium hydroxide (NaOH) to the waste liquid. In one embodiment, after the causticization step, the method may include a cooling crystallization step of cooling and crystallizing the waste liquid at a temperature of 0°C or lower. In one embodiment, after the causticization step, the method may include at least one crystallization step satisfying a crystallization rate of 3% to 10%.

### [Advantageous Effects]

The present invention relates to a method for recovering lithium according to one embodiment, and provides a method for recovering high-grade lithium by introducing a Ca compound in an impurity removal step, thereby easily removing phosphorus ions and carbonate ions in a basic waste liquid.

### [BRIEF DESCRIPTION OF THE DRAWINGS]

FIG. 1 shows XRD analysis results of a residue after an auxiliary raw material is introduced into the washing solution of the present invention.

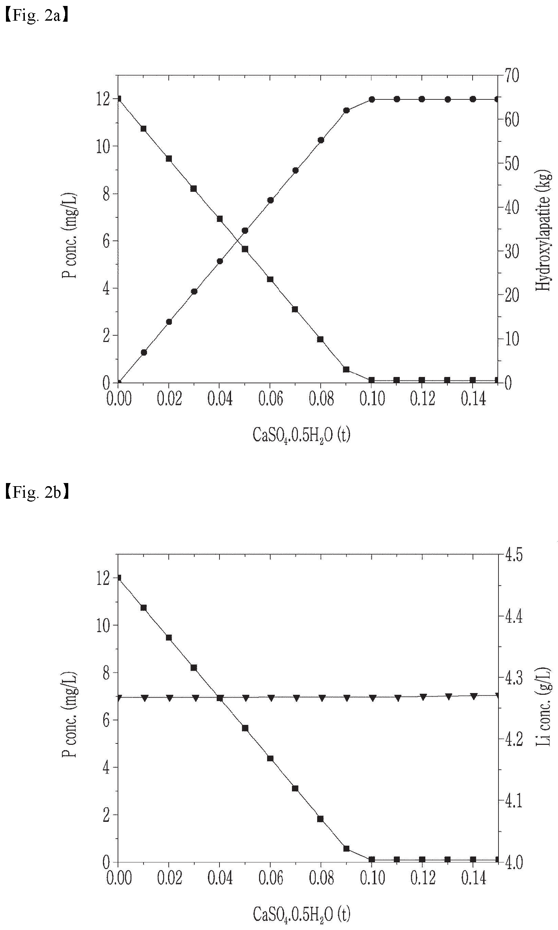

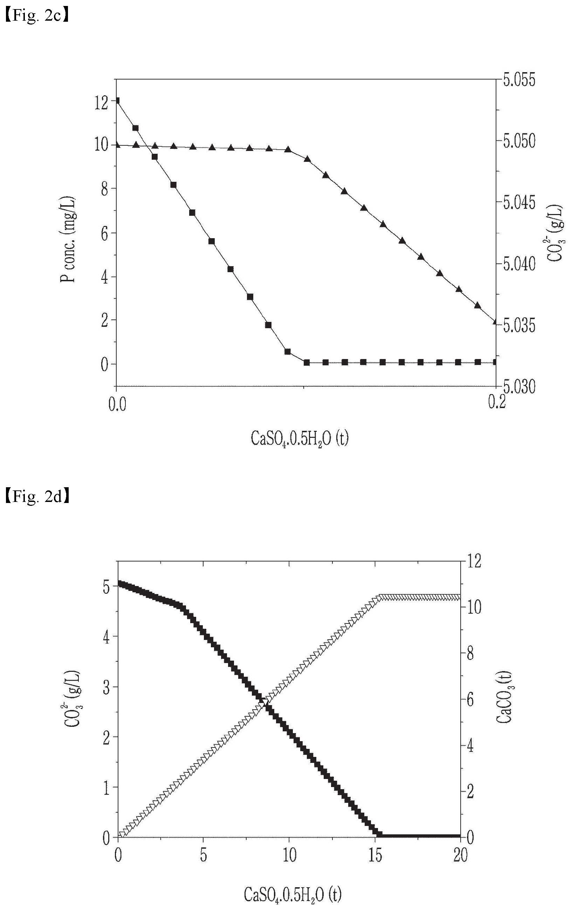

FIG. 2A shows, in one embodiment of the present invention, a removal amount of phosphorus ions in the washing solution according to an input amount of an auxiliary raw material and a generation amount of Ca₅(OH)(PO₄)₃ (hydroxyapatite) according to removal of phosphorus ions. FIG. 2B shows, in one embodiment of the present invention, a change in concentration of phosphorus ions and a change in concentration of lithium ions according to the input amount of the auxiliary raw material. FIG. 2C shows, in one embodiment of the present invention, a change in concentration of phosphorus ions and a change in concentration of carbonate ions according to introduction of the auxiliary raw material. FIG. 2D shows a change in concentration of carbonate ions and a generation amount of CaCO₃ according to introduction of the auxiliary raw material.
FIG. 3 is a schematic view of a process for recovering LiOH·H₂O from a concentrated washing solution according to one embodiment of the present invention.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

Hereinafter, embodiments of the present invention will be described in detail so that a person having ordinary skill in the art to which the present invention pertains can easily practice the present invention. However, the present invention may be embodied in various different forms and is not limited to the embodiments described herein.

A method for recovering lithium according to one embodiment of the present invention may include preparing a waste liquid containing lithium, removing impurities in the waste liquid, and recovering lithium in the waste liquid from which the impurities have been removed. Specifically, the method for recovering lithium of the present invention may introduce a Ca-based compound in removing impurities in the waste liquid, thereby preventing loss of lithium and recovering high-grade lithium.

The waste liquid may be a washing solution of a positive electrode material. Specifically, the washing solution of the positive electrode material may be a waste liquid generated during a process of manufacturing the positive electrode material. More specifically, the waste liquid may mean a filtered solution obtained by stirring a lithium transition metal oxide in a washing solution in order to reduce impurities, such as lithium by-products, present on a surface thereof after manufacturing the lithium transition metal oxide. More specifically, the waste liquid may be a solution containing lithium together with impurities such as phosphorus ions or carbonate ions, or metals such as nickel, cobalt, or manganese.

The step of preparing the waste liquid may be a step of preparing a waste liquid containing lithium and having a pH of 8 or more. Specifically, the waste liquid may have a pH of 9 or more, and more specifically 11 or more. This may be because the waste liquid exhibits basicity due to addition of an aqueous NaOH or NH₄OH solution according to a coprecipitation reaction during the positive electrode material manufacturing process.

The step of removing impurities in the waste liquid may introduce a Ca compound into the waste liquid. The Ca compound may be, for example, a sulfate-based material. More specifically, the Ca compound may be, for example, CaSO₄·H₂O.

In one embodiment, the step of removing the impurities may include introducing the Ca compound in an amount of 0.09 t or more based on 1,000 m³ of the waste liquid. Specifically, the Ca compound may be introduced in an amount of 0.10 t or more, and more specifically 0.15 t or more. As the Ca compound is introduced in an amount equal to or greater than the above-described range, phosphorus (P) ions in the waste liquid can be easily removed.

In one embodiment, the step of removing the impurities may include introducing the Ca compound in an amount of 15 t or more based on 1,000 m³ of the waste liquid. Specifically, the Ca compound may be introduced in an amount of 15 t or more, and more specifically 15.5 t or more. As the Ca compound is introduced in an amount equal to or greater than the above-described range, after phosphorus (P) ions are removed, carbonate ions may be removed. Specifically, the carbonate ions may start to be removed after the phosphorus ions are removed. This is because, when the Ca compound is introduced into the waste liquid, phosphorus ions are initially removed due to a difference in solubility.

In one embodiment, by the step of removing the impurities, P in the waste liquid may be removed to 0.003 g/L or less. Specifically, P in the waste liquid may be removed to 0.001 g/L or less, and more specifically 0.085 mg/L or less.

As the Ca compound is introduced into the waste liquid, the Ca compound may remove phosphorus (P) ions and carbonate ions (CO₃²⁻) in the waste liquid. Specifically, the Ca compound may react with phosphorus ions in the waste liquid and remove the phosphorus ions as Ca₅(OH)(PO₄)₃ (hydroxyapatite). Through precipitation of the hydroxyapatite, the phosphorus ions may be removed to the above-described range.

In one embodiment, by the step of removing the impurities, Si may be eluted to 0.003 g/L or less. Specifically, Si may be reduced to the above-described concentration. Specifically, Si may be eluted from impurities contained in the auxiliary raw material.

As the Ca compound is introduced into the waste liquid, carbonate ions in the waste liquid may be removed in the form of CaCO₃. Specifically, carbonate ions in the waste liquid may be removed as CaCO₃ due to a Ca source in the Ca compound, which is the auxiliary raw material.

The step of recovering lithium in the waste liquid from which the impurities have been removed may include concentrating the waste liquid from which the impurities have been removed. Specifically, the step of concentrating the waste liquid may concentrate the waste liquid by 80% to 95% based on the waste liquid before concentration. More specifically, the waste liquid may be concentrated by 85% to 90%. By concentrating the waste liquid within the above-described range, a waste liquid containing lithium at a high concentration can be obtained. More specifically, the concentration of lithium ions in the waste liquid can be increased.

In one embodiment, by the step of concentrating the waste liquid, the lithium may be concentrated to 20 g/L to 35 g/L. Specifically, the lithium may be concentrated to 25 g/L to 30 g/L. As the lithium is concentrated within the above-described range, lithium at a high concentration can be recovered.

In one embodiment, by the step of concentrating the waste liquid, at least one of lithium phosphate (Li₃PO₄) and lithium carbonate (Li₂CO₃) may not be precipitated. Specifically, a precipitate in a product obtained by concentrating the waste liquid may not include lithium phosphate (Li₃PO₄), may not include lithium carbonate (Li₂CO₃), or may not include both lithium phosphate (Li₃PO₄) and lithium carbonate (Li₂CO₃). This is because impurities were removed by the Ca compound in the impurity removal step in the waste liquid. Accordingly, the concentrated product does not include lithium phosphate (Li₃PO₄) or lithium carbonate (Li₂CO₃) as a precipitate, and thus lithium at a high concentration can be recovered without loss of lithium raw material.

In one embodiment, by the step of concentrating the waste liquid, at least one of Ca₅(OH)(PO₄)₃, CaCO₃, and Ca(OH)₂ may be included as a residue. As described above, this may be formed as a residue by reaction of the Ca compound with phosphorus ions and carbonate ions in the impurity removal step in the waste liquid. Since the residue includes the above-described material by the step of concentrating the waste liquid, high-concentration lithium from which impurities have been removed can be recovered.

In one embodiment, the step of concentrating the waste liquid from which the impurities have been removed may include performing an ion exchange resin method (IX) on the waste liquid. Specifically, the ion exchange resin method (IX) may be a step for removing Ca and B from the waste liquid. By including the step of performing the ion exchange resin method, Ca and B, which are residual impurities in the concentrated waste liquid, can be easily removed.

In one embodiment, the step of concentrating the waste liquid from which the impurities have been removed may include a causticization step of adding sodium hydroxide (NaOH) to the waste liquid. Specifically, the causticization step may be performed after the step of performing the ion exchange resin method. Specifically, the causticization step may introduce sodium hydroxide into the concentrated waste liquid, so that impurities containing Na or S can be easily removed in a subsequent process.

In one embodiment, after the causticization step, the method may include a cooling crystallization step of cooling and crystallizing the waste liquid at a temperature of 0°C or lower. Specifically, the cooling crystallization step may be performed at -5°C or lower, and more specifically at -10°C or lower.

Specifically, in the cooling crystallization step, impurities containing Na or S in the waste liquid can be easily removed. When the cooling crystallization step is not included, S in the solution is concentrated to a high concentration and may be contained in a double salt or hydrate, which causes a problem in that lithium recovery is difficult.

In one embodiment, after the causticization step, at least one crystallization step may be included. Specifically, the crystallization step may be a step of crystallizing the waste liquid that has undergone the causticization step. The crystallization step may include at least one step, and may be performed once or a plurality of times.

In one embodiment, the crystallization step may satisfy a crystallization rate of 3% to 10%. Specifically, the crystallization rate may be 4% to 8%, and more specifically 5% to 7%. As the crystallization rate satisfies the above-described range, precipitation of a double salt can be suppressed, and the yield of lithium can be maximized.

When the crystallization rate is outside the upper limit of the above-described range, there is a possibility that a double salt may be precipitated. When the crystallization rate is outside the lower limit of the above-described range, there is a problem in that a solution containing lithium, which is a final product, is not appropriately precipitated.

### [MODE FOR CARRYING OUT THE INVENTION]

Hereinafter, specific Examples of the present invention will be described. However, the following Examples are merely specific embodiments of the present invention, and the present invention is not limited to the following Examples.

### <Experimental Example>

The present invention relates to a method of introducing an auxiliary raw material in a process of removing phosphorus ions and carbonate ions, which are impurities in a washing solution of a positive electrode material, and includes a step of introducing the auxiliary raw material into the washing solution to remove phosphorus ions and carbonate ions, a step of concentrating the washing solution from which impurities have been removed to increase a Li ion concentration, and a step of performing first and second crystallizations from the concentrated washing solution. Specific experimental methods are as follows.

### Step of Introducing Auxiliary Raw Material Into Washing Solution

### <Example>

Table 1 below shows analysis results of the washing solution.

The washing solution was measured for cation concentrations using an inductively coupled plasma optical emission spectrometer (ICP-OES) apparatus, and carbonate ions were measured using a total organic carbon analyzer (TOC).

**[Table 1]**

| | pH | ICP Analysis Results [g/L] | | | | | | | CO₃²⁻ [g/L] |
|---|---|---|---|---|---|---|---|---|---|
| | | Li | S | P | B | K | Na | Etc. | |
| Washing solution | 13.03 | 4.504 | 3.595 | 0.012 | 0.031 | 0.010 | 0.253 | <0.003 | 4.6 |

CaSO₄·0.5H₂O having a purity of 95% among Ca-based auxiliary raw materials was introduced into the washing solution in an amount of 1.1 equivalents based on removal of phosphorus ions.

### <Comparative Example>

Ca(OH)₂ having a purity of 95% among Ca-based auxiliary raw materials was introduced into the washing solution in an amount of 1.1 equivalents based on removal of phosphorus ions.

Table 2 below shows analysis results of the solution after introducing the Ca-based auxiliary raw material into the washing solution according to the Example and the Comparative Example.

**[Table 2]**

| | pH | ICP Analysis Results [g/L] | | | | | | | | | Remar ks |
|---|---|---|---|---|---|---|---|---|---|---|---|
| | | Li | s | Ca | P | B | K | Na | Si | Etc. | |
| Washing solution | 13.03 | 4.504 | 3.595 | <0.003 | 0.012 | 0.031 | 0.010 | 0.253 | <0.003 | <0.003 | - |
| Ca(OH)₂ | 13.01 | 4.460 | 3.574 | 0.091 | <0.003 | 0.031 | 0.009 | 0.252 | 0.010 | <0.003 | Comp arative Examp le |
| CaSO₄·0.5H ₂O | 13.11 | 4.503 | 7.546 | 0.483 | <0.003 | 0.030 | 0.009 | 0.251 | <0.003 | <0.003 | Examp le |

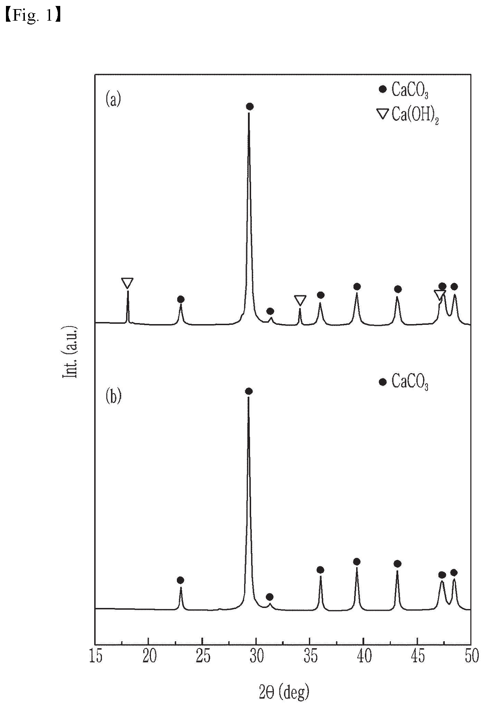

FIG. 1 shows XRD analysis results of a residue after an auxiliary raw material is introduced into the washing solution of the present invention.

Referring to FIG. 1, FIG. 1(a) shows XRD analysis results when Ca(OH)₂ was introduced as an auxiliary raw material in an amount of 1.1 equivalents based on removal of phosphorus ions, and FIG. 1(b) shows XRD analysis results when CaSO₄·0.5H₂O was introduced as an auxiliary raw material in an amount of 1.1 equivalents based on removal of phosphorus ions.

Referring to FIG. 1 and Table 2, in the XRD analysis results, when Ca(OH)₂ was used, it was confirmed that the introduced Ca(OH)₂ remained due to high pH. In contrast, in the Example in which the same equivalent amount of CaSO₄·0.5H₂O was introduced, it was confirmed that the entire amount was converted into CaCO₃ and CaSO₄·0.5H₂O did not remain. Through this, it can be confirmed that, in the case of a washing solution having a pH of about 13, introducing CaSO₄·0.5H₂O is more efficient than introducing Ca(OH)₂.

In addition, when Ca(OH)₂ was used as the auxiliary raw material, 0.010 g/L of Si among contained impurities was eluted, and it can be confirmed that the Si content was high because the pH of the washing solution was about 13, which is an environment in which Si can be eluted. In contrast, when CaSO₄·0.5H₂O was introduced as the auxiliary raw material, it was confirmed that Si or other impurities were detected in small amounts.

Therefore, when Ca(OH)₂ is used as the auxiliary raw material as in the Comparative Example, there is a problem in that a neutralization process of lowering the pH to a level of 6 to 8 and neutralizing the solution is additionally required in order to remove Si. In contrast, when CaSO₄·0.5H₂O is used as the auxiliary raw material as in the Example, it was confirmed that an additional purification process is not required.

Specifically, when the pH of the waste liquid is 13 or more, it was confirmed that efficiency is excellent when CaSO₄·0.5H₂O is used as the Ca compound, which is the auxiliary raw material.

### Control of Input Amount of Auxiliary Raw Material in Step of Introducing Auxiliary Raw Material Into Washing Solution

FIG. 2A shows, in one embodiment of the present invention, removal of phosphorus ions in the washing solution according to an input amount of an auxiliary raw material and a generation amount of hydroxyapatite. FIG. 2B shows, in one embodiment of the present invention, a change in concentration of lithium ions according to the input amount of the auxiliary raw material. FIG. 2C shows, in one embodiment of the present invention, a change in concentration of phosphorus ions and a change in concentration of carbonate ions according to introduction of the auxiliary raw material. FIG. 2D shows a change in concentration of carbonate ions and a generation amount of CaCO₃ according to introduction of the auxiliary raw material.

Referring to FIG. 2A, CaSO₄·0.5H₂O as the auxiliary raw material was introduced into 1000 m³ of the washing solution while varying the content (t) thereof. When the content of the auxiliary raw material became 0.09 t, specifically 0.10 t or more, it was confirmed that phosphorus (P) ions were almost removed. Specifically, when the auxiliary raw material was 0 t, it can be confirmed that phosphorus ions were 12 mg/L, and the content of CO₃²⁻ was 4.6 g/L. Under these conditions, it was confirmed that at least 15.5 t of the auxiliary raw material should be introduced based on 1,000 m³ of the washing solution so that lithium carbonate is not generated during the concentration process. For example, when the auxiliary raw material was 15.0 t, it was confirmed that lithium phosphate was not generated during the concentration process, but some lithium carbonate could be generated. Accordingly, when the auxiliary raw material was 0.10 t, it was confirmed that phosphorus ions were removed to a level of 0.085 mg/L.

Specifically, it can be confirmed that phosphorus ions in the washing solution react with CaSO₄·0.5H₂O, which is the auxiliary raw material, and are converted into and removed as hydroxyapatite. As the phosphorus ions are removed as the hydroxyapatite, precipitation of lithium phosphate in the concentration process can be prevented, thereby preventing loss of lithium (Li).

In addition, it can be confirmed that carbonate ions in the washing solution are removed as CaCO₃ due to the Ca source in the auxiliary raw material. Accordingly, scale due to precipitation of lithium carbonate in the concentration process can be prevented.

Referring to FIG. 2B, it was confirmed that, according to introduction of CaSO₄·0.5H₂O, which is the auxiliary raw material, phosphorus ions were removed, but the concentration of Li ions did not greatly change, and thus lithium was not lost. Specifically, it was confirmed that a Li source was not lost as impurities such as lithium phosphate.

Referring to FIG. 2C, it was confirmed that, after introduction of the auxiliary raw material, carbonate ions were removed after phosphorus ions were removed. Specifically, when about 0.1 t of the auxiliary raw material was introduced, it was confirmed that phosphorus ions were initially removed due to a difference in solubility. After most of the phosphorus ions were removed, it was confirmed that carbonate ions (CO₃²⁻) were removed.

Referring to FIG. 2D, it was confirmed that, as the input amount of the auxiliary raw material increased, carbonate ions in the washing solution were removed as CaCO₃. Specifically, when the input amount of the auxiliary raw material was 15.6 t, it can be confirmed that the carbonate ion concentration decreased to less than 10 mg/L, and CaCO₃ increased to 10 t or more. Accordingly, it can be confirmed that the carbonate ions are converted into and removed as CaCO₃. As described above, it was confirmed that, by introducing the auxiliary raw material, impurities in the washing solution can be reduced and loss of Li can be prevented.

### Step of Concentrating Washing Solution From Which Impurities Have Been Removed

Before recovering a Li product from the washing solution from which impurities have been removed, a pretreatment step may be performed. Specifically, the pretreatment step may be a step of concentrating the Li concentration from 4 g/L to a level of 20 g/L to 30 g/L through concentration of the washing solution.

### <Example>

In the pretreatment step, impurities, i.e., phosphorus and carbonate ions, in the washing solution were removed with CaSO₄·0.5H₂O, which is the auxiliary raw material, and then lithium was concentrated from 4 g/L to 27 g/L.

### <Comparative Example>

In the pretreatment step, impurities, i.e., phosphorus and carbonate ions, in the washing solution were not removed, and lithium was concentrated from 4 g/L to 27 g/L.

Table 3 below shows changes in ion concentrations in the washing solution when lithium was concentrated according to the Example and the Comparative Example.

Table 4 below shows precipitates generated when the washing solution was concentrated according to the Example and the Comparative Example.

The precipitates were confirmed as lithium phosphate or lithium carbonate according to OLI simulation results.

**[Table 3]**

| Cla ssifi cati on | Con centr ation | Volume | pH | Concentration (g/L) | | | | | | | |
|---|---|---|---|---|---|---|---|---|---|---|---|
| | | | | Li | S | Na | B | K | Ca | P | CO₃⁻² |
| Exa mpl e | Befo re conc entra tion | 1003.1 | 13.02 | 4.49 | 7.02 | 0.25 | 0.31 | 0.010 | 0.09 | <0.003 | <0.003 |
| | Afte r conc entra | 166.8 | 12.05 | 27.00 | 42.21 | 1.52 | 0.19 | 0.060 | 0.03 | <0.003 | <0.003 |
| | tion | | | | | | | | | | |
| Co mp arat ive Exa mpl e | Befo re conc entra tion | 1021.3 | 13.04 | 4.26 | 3.60 | 0.25 | 0.03 | 0.010 | <0.003 | <0.003 | 5.06 |
| | Afte r conc entra tion | 113.1 | 12.24 | 27.0 | 31.80 | 2.24 | 0.27 | 0.090 | - | <0.003 | <0.003 |

**[Table 4]**

| Classifi cation | Concent ration | Volume | Precipitation Amount (t) | | | | |
|---|---|---|---|---|---|---|---|
| | | | Li₃PO₄ | Li₂CO₃ | Ca₅(OH)(PO₄)₃ | CaCO₃ | Ca(OH)₂ |
| Exampl e | Before concent ration | 1003.1 | 0 | 0 | 0 | 0 | 0 |
| | After concent ration | 166.82 | Not generated | Not generated | 0.065 | 10.45 | 0.143 |
| Compar ative Exampl e | Before concent ration | 1021.3 | 0 | 0 | - | - | - |
| | After concent ration | 113.1 | 0.044 | 6.436 | - | - | - |

Referring to Tables 3 and 4, it was confirmed that, in the Comparative Example, when the washing solution was concentrated by about 89% from 1021.3 m³ to 113.1 m³, the Li concentration could be concentrated from 4 g/L to 27 g/L. In the case of the Comparative Example, since impurities were not removed, lithium phosphate and lithium carbonate were generated as precipitates, and thus it was confirmed that a Li raw material was lost. Specifically, in the case of the Comparative Example, since the concentration was performed without introducing the Ca-based auxiliary raw material, Ca -based precipitates were not generated, and since the Ca based auxiliary raw material was not present, phosphorus ions or carbonate ions were lost as Li₃PO₄ or Li₂CO₃.

In contrast, in the Example, when the washing solution was concentrated by about 84% from 1003.1 m³ to 166.82 m³, it was confirmed that the Li concentration could be concentrated from 4 g/L to 27 g/L. In the case of the Example, Li was not lost as a precipitate, and thus the concentration rate could be reduced, whereby costs could be reduced. In addition, in the case of the Example, since the concentration step was performed after impurities were removed by introducing the auxiliary raw material, there was no loss of the Li raw material as a precipitate, and it can be confirmed that Ca₅(OH)(PO₄)₃, CaCO₃, and Ca(OH)₂ were generated as residues. Accordingly, it was confirmed that loss of lithium in the washing solution was minimized and impurities were easily removed.

### Step of First and Second Crystallization From Concentrated Washing Solution

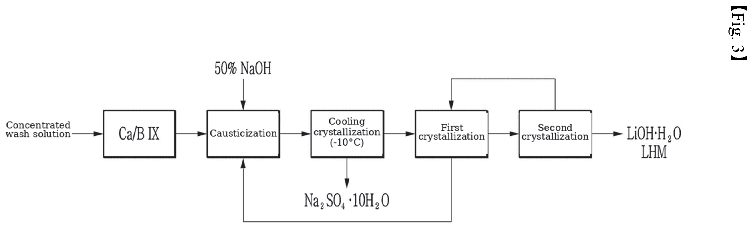

FIG. 3 is a schematic view of a process for recovering LiOH·H₂O from a concentrated washing solution according to one embodiment of the present invention.

Referring to FIG. 3, Ca and B were removed from the concentrated washing solution using an ion exchange resin method, and then a causticization process was performed by introducing 50% NaOH. Thereafter, cooling crystallization, first crystallization, and second crystallization were performed, thereby recovering LiOH·H₂O.

Specifically, Ca and B in the concentrated washing solution were removed from the concentrated washing solution using an ion exchange resin method (IX). Thereafter, 50% NaOH was introduced to perform a causticization process.

Table 5 below shows concentrations of the washing solution before and after introducing NaOH into the concentrated washing solution.

**[Table 5]**

| Classification | Volume (m³) | pH | Concentration (g/L) | | | |
|---|---|---|---|---|---|---|
| | | | Li | S | Na | K |
| Before input | 166.82 | 12.05 | 27.00 | 42.21 | 1.517 | 0.060 |
| After input | 189.09 | 12.61 | 23.82 | 37.24 | 56.67 | 0.053 |

Referring to Table 5, it was confirmed that, through the causticization step, the concentration of S was reduced and the concentration of Na was increased, thereby controlling the concentration of the washing solution to a state in which Na could be easily separated in a subsequent process.

Thereafter, the causticized product was subjected to cooling crystallization under a condition of -10°C to separate Na₂SO₄·10H₂O. Through the causticization and cooling crystallization steps, it was possible to prevent a problem in which S in the solution is concentrated to a high concentration and included in a double salt or hydrate during recovery of LiOH·H₂O.

Table 6 below shows concentrations of the washing solution before and after performing the cooling crystallization process on the solution that has undergone the causticization process.

**[Table 6]**

| Classification | Volume (m³) | pH | Concentration (g/L) | Generation | | | |
|---|---|---|---|---|---|---|---|
| | | | Li | S | Na | K | Amount of Na₂SO₄·10H₂O (t) |
| Before cooling | 189.09 | 12.61 | 23.82 | 37.24 | 56.67 | 0.059 | - |
| After cooling | 146.34 | 14< | 30.78 | 12.80 | 22.58 | 0.068 | 51.93 |

Referring to Table 6, it was confirmed that, when the causticized solution was cooled at - 10°C, Na₂SO₄·10H₂O was generated, and by removing the generated Na₂SO₄·10H₂O, the concentration effect of Li could be increased.

Thereafter, the product obtained by excluding Na₂SO₄·10H₂O from the causticized product was subjected to first crystallization and second crystallization to recover lithium hydroxide (LiOH·H₂O). Specifically, after Na₂SO₄·10H₂O was removed from the causticized product, LiOH·H₂O was recovered.

Table 7 below shows results of a filtrate and a precipitate when a crystallization step was performed at a crystallization rate of 6%. Since a considerable amount of Li remains in the filtrate after evaporative crystallization and a double salt may be precipitated when the crystallization rate is increased during evaporative crystallization, an appropriate crystallization rate needed to be selected, and the selected crystallization rate was 6%.

**[Table 7]**

| Crystallizatio n Rate (%) | Solution | | | | | | Precipitate | |
|---|---|---|---|---|---|---|---|---|
| | Volume (m³) | pH | Concentration (g/L) | | | | LiOH·H₂O | |
| | | | Li | S | Na | K | Weight (t) | Ratio (%) |
| 0 | 146.34 | >14 | 30.78 | 12.80 | 22.58 | 0.068 | - | - |
| 6 | 116.38 | 13.71 | 36.38 | 16.10 | 28.39 | 0.086 | 1.64 | 100 |

Referring to Table 7, after cooling crystallization, when a crystallization rate of 6% was applied to the filtrate, it was confirmed that only high-grade LiOH·H₂O was observed in the precipitate, and no double salt was generated.

The present invention is not limited to the above embodiments and/or Examples and may be manufactured in various different forms. A person having ordinary skill in the art to which the present invention pertains will understand that the present invention may be embodied in other specific forms without changing the technical spirit or essential features of the present invention. Therefore, the above-described embodiments and/or Examples should be understood as illustrative in all respects and not restrictive.

## Claims

1. A method for recovering lithium, comprising:
preparing a waste liquid containing lithium and having a pH of 8 or more;
introducing a Ca compound into the waste liquid to remove impurities; and
recovering lithium in the waste liquid from which the impurities have been removed.

2. The method for recovering lithium of claim 1,
wherein the waste liquid containing lithium and having a pH of 8 or more is a washing solution of a positive electrode material.

3. The method for recovering lithium of claim 1,
wherein, by removing the impurities,
P in the waste liquid is removed to 0.003 g/L or less.

4. The method for recovering lithium of claim 1,
wherein, when the pH of the waste liquid is 13 or more,
the Ca compound is CaSO₄·0.5H₂O.

5. The method for recovering lithium of claim 1,
wherein, by removing the impurities,
carbonate ions in the waste liquid are removed in the form of CaCO₃.

6. The method for recovering lithium of claim 1,
wherein phosphorus (P) ions in the waste liquid are removed first, and then carbonate ions (CO₃²⁻) are removed.

7. The method for recovering lithium of claim 6,
wherein removing the impurities comprises introducing the Ca compound in an amount of 0.09 t or more based on 1,000 m³ of the waste liquid.

8. The method for recovering lithium of claim 1,
wherein removing the impurities comprises introducing the Ca compound in an amount of 15 t or more based on 1,000 m³ of the waste liquid.

9. The method for recovering lithium of claim 1,
wherein, by removing the impurities,
phosphorus (P) ions are converted into and removed as Ca₅(OH)(PO₄)₃ (hydroxyapatite).

10. The method for recovering lithium of claim 1,
wherein recovering lithium comprises concentrating the waste liquid from which the impurities have been removed, and
wherein concentrating the waste liquid concentrates the waste liquid by 80% to 95% based on the waste liquid before concentration.

11. The method for recovering lithium of claim 10,
wherein, by concentrating the waste liquid, the lithium is concentrated to 20 g/L to 35 g/L.

12. The method for recovering lithium of claim 10,
wherein, by concentrating the waste liquid, at least one of lithium phosphate (Li₃PO₄) and lithium carbonate (Li₂CO₃) is not precipitated.

13. The method for recovering lithium of claim 1,
wherein concentrating the waste liquid from which the impurities have been removed comprises a causticization step of adding sodium hydroxide (NaOH) to the waste liquid.

14. The method for recovering lithium of claim 13,
further comprising, after the causticization step, a cooling crystallization step of cooling and crystallizing the waste liquid at a temperature of 0°C or lower.

15. The method for recovering lithium of claim 13,
further comprising, after the causticization step, at least one crystallization step satisfying a crystallization rate of 3% to 10%.
